# EUROPÄISCHE PATENTSCHRIFT

(11) **EP 1 395 473 B1**
(45) Veröffentlichungstag und Bekanntmachung des Hinweises auf die Patenterteilung: **24.11.2004**
(21) Anmeldenummer: 02745121.0
(22) Anmeldetag: 04.06.2002
(51) Int. Cl.: B60T 7/04, B60T 7/10

(54) **VORRICHTUNG ZUR BETÄTIGUNG VON FESTSTELLBREMSEN FÜR KRAFTFAHRZEUGE**
DEVICE FOR ACTUATING PARKING BRAKES IN MOTOR VEHICLES
DISPOSITIF PERMETTANT D'ACTIONNER LE FREIN DE STATIONNEMENT D'UN VEHICULE A MOTEUR

(30) Priorität: 09.06.2001 DE 20109710 U
(43) Veröffentlichungstag der Anmeldung: 10.03.2004
(73) Patentinhaber: Edscha Betätigungssysteme GmbH, 94491 Hengersberg (DE)
(72) Erfinder: BRAKER, Ulf, 13158 Berlin (DE)
(74) Vertreter: Sparing, Rolf Klaus
(86) Internationale Anmeldenummer: PCT/DE2002/002028
(87) Internationale Veröffentlichungsnummer: WO 2002/100694

(56) Entgegenhaltungen:
- DE-A- 3 343 268
- DE-A- 19 506 592
- US-A- 4 850 242
- US-A- 5 275 262
- US-A- 5 400 883

## Beschreibung

Die Erfindung betrifft ein Vorrichtung zur Betätigung von Feststellbremsen für Kraftfahrzeuge nach dem Oberbegriff des Anspruchs 1.

Bei den aus der Praxis des Kraftwagenbaus bekannten Betätigungseinrichtungen für Feststellbremsen, vor allem Fußfeststellbremsen und Handbremsen, erfolgt eine Arretierung der Bremse mittels einer Arretierung des Betätigungshebels, wobei die Arretierung des Betätigungshebels meist mittels einer Ratsche nach dem Zahn-Sperrklinkeprinzip erfolgt. Dabei ist meist eine große Anzahl beweglicher und aufwendig geformter. Bauteile aus zum Teil gehärtetem Material erforderlich. Zudem ist eine stufenlose Feststellung eines Betätigungshebels bedingt durch das Zahn-Sperrklinkeprinzip nicht möglich.

Gattungsgemäße DE 33 43 268 A1 beschreibt eine Vorrichtung zur Betätigung einer Feststellbremse von Kraftfahrzeugen, umfassend einen um eine Schwenkachse verschwenkbaren Betätigungshebel, eine durch den Betätigungshebel verdrehbare Trommel sowie eine auf der Trommel angeordnete, ein loses und ein festgelegtes Ende aufweisende Schraubenfeder, deren Windungen die Trommelumfangsfläche derart umschließen, daß sie sich bei selbsttätigem Verschwenken des Betätigungshebels in Richtung seiner Bremsenfreigabestellung an die Trommelumfangsfläche reibungsschlüssig anlegen und diese blockieren. Bei dieser Anordnung wird das Zahn-Sperrklinkeprinzip zu Gunsten einer stufenlosen, auf Reibungsschluß basierenden Lösung vermieden. Nachteilig bei der vorgeschriebenen Anordnung ist dabei, daß die Schraubenfeder auf der Außenumfangsfläche der Trommel aufliegt. Um Funktionsstörungen, z.B. bedingt durch öl- oder fetthaltige Verschmutzungen, zu vermeiden, sind weitergehende Maßnahmen zur Kapselung der Schraubenfeder bzw. der Außenumfangsfläche der Trommel erforderlich. Zudem ist prinzipbedingt bei der vorbeschriebenen Anordnung das festgelegte Ende der Schraubenfeder zugbelastet, wodurch das Problem einer sicheren Festlegung des zugbelasteten Endes entweder durch aufwendige Festlegemittel oder durch konstruktive Maßnahmen zur Verlegung des Kraftangriffs gelöst werden muß.

US 5,275,262 zeigt eine Vorrichtung für Fußfeststellbremsen, bei der eine Feststellung einer Bremse durch eine gegenläufige Aufweitung einer in einem Hohlzylinder angeordneten, einerseits gegen die Innenwand des Hohlzylinders und andererseits gegen einen Lagerschaft abgestützen Schraubenfeder erfolgt. Eine Betätigung der Bremse erfolgt dabei durch einen Pedalhebel, der mittels einer weiteren, eine Außenumfangsfläche des Hohlzylinders umgreifenden Schraubenfeder reibschlüssig mit dem Hohlzylinder verbunden ist. Nachteilig ist dabei das Vorhandensein von zwei Federn, was einer einfachen und kostengünstigen Bauweise entgegensteht. Zudem ist das an dem Lagerschaft abgestützte Ende der Schraubenfeder bei einer Betätigung der Bremse mit hohen Scherkräften belastet.

US 4,850, 242 zeigt eine Feststellbemse, bei der ein als Fußpedal ausgebildeter Bremsbetätigungshebel schwenkbar um eine Achse an einem Halter vorgesehen ist, wobei an dem Bremsbetätigungshebel ein Seilzug angeordnet ist. An der Achse ist ein die Achse umlaufendes Federelement zum lösbaren Festlegen des Bremsbetätigungshebels in einer Bremsbetätigungsposition vorgesehen, wobei ein erstes Ende des Federelements an dem Halter festgelegt und ein zweites Ende des Federelements mit einer Hebelvorrichtung gekoppelt ist.

Es ist die Aufgabe der Erfindung, eine Vorrichtung zur Betätigung von Feststellbremsen für Kraftfahrzeuge zu schaffen, die eine stufenlose Feststellung bei möglichst geringer Anzahl von Bauteilen ermöglicht.

Diese Aufgabe wird für die eingangs genannte Vorrichtung erfindungsgemäß mit den kennzeichnenden Merkmalen des Anspruchs 1 gelöst.

Dabei ist zum einen das Federelement gegen die Innenumfangswandung der Trommel abstützbar angeordnet, wodurch zugleich eine einfache Kapselung des Federelements gegen Verschmutzung ermöglicht wird, und zum anderen ist der Betätigungshebel direkt mit der Trommel verbunden, so daß zur Einsparung von Bauteilen auf eine weitere, außenliegende Schraubenfeder verzichtet wird.

In einer bevorzugten Weiterbildung einer erfindungsgemäßen Vorrichtung ist das Federelement dabei vorteilhaft als Schraubenfeder aus einem gewickelten Federdraht ausgeführt, wobei bedingt durch die innenliegende Anordnung der Schraubenfeder ein festes Ende der Schraubenfeder schubbelastet ist. Dadurch wird ein einfaches und sicheres Festlegen dieses schubbelasteten, festen Endes des Federdrahtes an einem karosseriefesten Widerlager ermöglicht. Vorteilhaft ist dabei das feste Ende des Federdrahtes durch Durchbrechungen der Trommel aus der Trommel herausgeführt. Das Widerlager ist bevorzugt außerhalb der Trommel angeordnet, und das Ende das Federdrahtes ist auf einfache Weise in einer zum karosseriefesten Widerlager gehörigen, einendig geschlossenen oder sich zu einem Ende verjüngenden Hülse klemmend gehaltert. Je größer der Innendurchmesser der Trommel ist, desto höher sind die erzielbaren Haltekräfte und desto geringer ist ein bei Einsetzen der Haltewirkung der Feder auftretender Schlupfwinkel, um den der Betätigungshebel bei Loslassen nach einer Betätigung zurückdreht. Durch die Durchführung des festen Endes des Federdrahtes durch die Durchbrechungen in der Trommel wird auf einfache Weise eine zuverlässige Abstützung des festen Endes auch bei großen Trommeldurchmesser gewährleistet.

Ein freies, der Lösung der Feststellvorrichtung dienendes Ende des Federdrahtes ist vorteilhaft in einem Lösehebel festgelegt. Vorteilhaft ist das freie Ende durch Durchbrechungen der Trommel aus der Trommel herausgeführt, und der Lösehebel ist außerhalb der Trommel angeordnet. Der Lösehebel ist gelenkig an der Karosserie des Fahrzeugs festgelegt und mit einem Seilzug zum Lösen der Feststellbremse verbunden. Hierdurch kann eine vorteilhafte Kraftübersetzung eines Seizugs zum Lösen der Feststellbremse auf das freie Ende des Federdrahtes der Schraubenfeder erfolgen. Alternativ dazu kann es vorgesehen sein, daß das freie Ende der Schraubenfeder unmittelbar mit dem Seilzug zum Lösen der Feststellbremse verbunden ist, so daß zur Vermeidung von Bauteilen auf den Lösehebel verzichtet wird.

In einer bevorzugten Ausgestaltung der vorliegenden Erfindung bestehen die Trommel und der Betätigungshebel jeweils aus einem separaten Bauteil, die durch Verbindungsmittel wie etwa Schrauben aneinander festgelegt sind. Dadurch wird auf einfache Weise gewährleistet, daß lediglich die Trommel aus einem besonderen, zur Vermittlung einer hohen Reibung zwischen Federelement und Trommel geeigneten Material besteht, wogegen der Betätigungshebel aus einem üblichen Gußmaterial oder einem Blechformteil bestehen kann. Ein Seilzug zur Betätigung der Bremse ist auf bekannte Weise an dem Betätigungshebel festgelegt. Alternativ dazu kann der Seilzug auch an der Trommel festgelegt sein und insbesondere die Trommel in einer oder mehrerer Windungen umlaufen.

Da die erfindungsgemäße Vorrichtung sowohl in ihrem Durchmesser als auch in ihrer zur Achse gerichteten Ausdehnung besonders kleinbauend ist, kann sie als Vorrichtung sowohl für Fußfeststellbremsen als auch für Handbremsen eingesetzt werden.

Weitere Merkmale und Vorteile der Erfindung ergeben sich aus dem nachfolgend beschriebenen Ausführungsbeispiel sowie aus den abhängigen Ansprüchen.

Nachfolgend wird ein bevorzugtes Ausführungsbeispiel einer erfindungsgemäßen Vorrichtung anhand der anliegenden Zeichnungen näher erläutert.
- Fig. 1: zeigt eine schematische Seitenansicht einer als Fußfeststellbremse ausgebildeten erfindungsgemäßen Vorrichtung.
- Fig. 2: zeigt eine schematische Draufsicht auf eine erfindungsgemäße Vorrichtung gemäß Fig. 1.

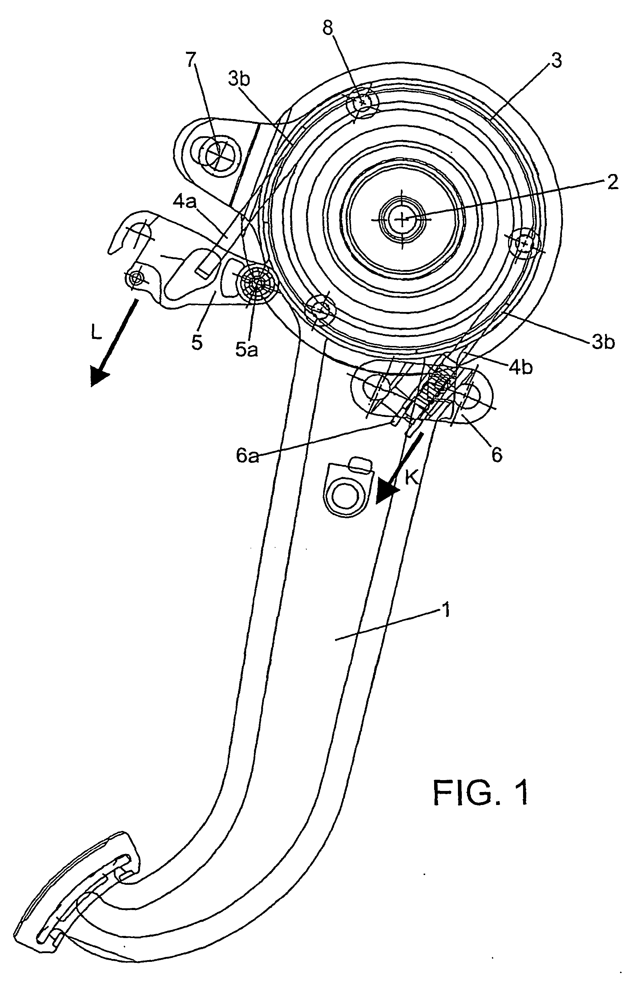

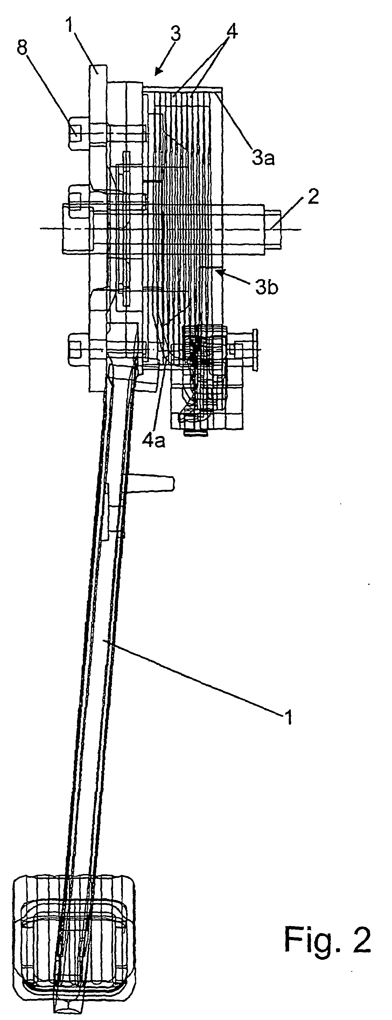

Wie Fig. 1 und Fig. 2 zeigen, umfaßt die Vorrichtung einen Betätigungshebel 1, der um eine Achse 2 drehbar gelagert ist.

Eine Trommel 3 ist mittels Schrauben 8 konzentrisch zu der Achse 2 an dem Betätigungshebel 1 festgelegt. Die Trommel 3 erstreckt sich axial zu der Achse 2 und weist eine Innenumfangswandung 3a auf. In die Trommel 3 ist eine Schraubenfeder 4 eingelegt, die aus einem Federdraht gewickelt ist, wobei die Außenflächen des Federdrahtes an der Innenumfangswandung 3a der Trommel 3 reibschlüssig anliegen. Die Trommel 3 weist Durchbrechungen 3b auf, durch welche ein freies Ende 4a des Federdrahtes und ein festes Ende 4b des Federdrahtes herausgeführt sind. Das freie Ende 4a des Federdrahtes ist in einem Lösehebel 5 festgelegt. Der Lösehebel 5 ist um ein Gelenk 5a drehbar an der Karosserie des Fahrzeugs festgelegt. Das feste Ende 4b des Federdrahtes ist in einem Widerlager 6 festgelegt. Das Widerlager 6 ist an der Karosserie des Fahrzeugs festgelegt und umfaßt eine Hülse 6a, in die das feste Ende 4b des Federdrahts klemmend eingesteckt ist.

An dem Betätigungshebel 1 befinden sich Aufnahmemittel 7 zur Festlegung eines Seilzugs zur Betätigung einer nicht dargestellten Bremse des Kraftfahrzeugs.

Die Erfindung funktioniert nun wie folgt:

Bei Betätigung des Betätigungshebels 1 wird der Hebel und die mit ihm drehfest verbundene Trommel entgegen dem Uhrzeigersinn (siehe Fig. 1) um die Achse 2 verschwenkt. Die Reibung entlang der Außenumfangsfläche der Schraubenfeder 4 ist dabei so gerichtet, daß die Feder sich bei reibungsbedingter Mitnahme und gleichzeitigem Festhalten im Widerlager 6 radial verjüngt, so daß die reibschlüssige Kraft an der Innenumfangswandung 3a der Trommel 3 abnimmt und der Betätigungshebel bewegbar wird. Dabei wird der nicht dargestellte Seilzug zur Betätigung der Bremse gestrafft und die Bremse betätigt. Bei Loslassen des Betätigungshebels übt nun der Seilzug der Bremse eine rücktreibende Kraft auf den Betätigungshebel aus, die zu einer Drehung des Betätigungshebels im Uhrzeigersinn führen würde. Hierbei wird jedoch die radial nach außen vorgespannte Schraubenfeder 4 in einer Richtung mitgenommen, in der sie sich, bedingt durch die Abstützung des festen Endes 4b in dem Widerlager 6, radial nach außen aufweitet. Dies führt zu einem Blockieren des Betätigungshebels bei Bewegung im Uhrzeigersinns. Die Kraft wird dabei über das feste Ende 4b der Schraubenfeder 4 in Richtung des Pfeils K auf die Hülse 6a des Karosseriefesten Widerlagers 6 übertragen.

Um die derart blockierte Feststellbremse wieder zu lösen, wird mittels eines nicht dargestellten Lösezugs über den Lösehebel 5 entlang der Pfeilrichtung L an dem freien Ende 4a der Schraubenfeder 4 gezogen. Dadurch bedingt verjüngt sich die Schraubenfeder 4, was zu einem Nachlassen der Reibungskraft an der Innenumfangswandung 3a führt. Der Betätigungshebel wird dadurch wieder frei und durch die rücktreibende Kraft der Bremse bzw. weiterer nicht dargestellte Rückstellfedern im Uhrzeigersinn in seine Ausgangsposition verstellt.

## Patentansprüche

1. Vorrichtung zur Betätigung von Feststellbremsen für Kraftfahrzeuge, umfassend
einen um eine Achse (2) gegenüber der Karosserie des Kraftfahrzeugs drehbar gelagerten Betätigungshebel (1),
eine zu der Achse (2) konzentrisch angeordnete, sich axial erstreckende Trommel (3), und
ein bezüglich der Achse (2) drehfest festgelegtes, gegen eine Innenumfangswandung (3a) der Trommel abstützbares Federelement (4),
**dadurch gekennzeichnet,**
**daß** die Trommel (3) mit dem Betätigungshebel (1) drehfest verbunden ist.

2. Vorrichtung nach Anspruch 1, **dadurch gekennzeichnet, daß** das Federelement als Schraubenfeder (4) aus einem gewickelten Federdraht ausgebildet ist, wobei die Wicklungen des Federdrahts mit ihren radial nach außen gerichteten Oberflächen an der Innenumfangswandung (3a) anliegen.

3. Vorrichtung nach Anspruch 2, **dadurch gekennzeichnet, daß** Enden (4a, 4b) des Federdrahts mittels Durchbrechungen der Trommel (3) im wesentlichen tangential von der Schraubenfeder (4) weggerichtet aus der Trommel (3) herausgeführt sind.

4. Vorrichtung nach Anspruch 2 oder 3, **dadurch gekennzeichnet, daß** ein freies Ende des Federdrahts an einem Lösehebel (5) festgelegt ist.

5. Vorrichtung nach einem der Ansprüche 2 bis 4, **dadurch gekennzeichnet, daß** ein festes Ende des Federdrahts mittels eines Widerlagers (6) mit einem karosseriefesten Element des Kraftfahrzeugs verbunden ist.

6. Vorrichtung nach Anspruch 5, **dadurch gekennzeichnet, daß** das feste Ende des Federdrahts in eine an dem Widerlager ausgebildete, einendig geschlossene oder verjüngte Hülse (6a) klemmend eingesteckt ist.

7. Vorrichtung nach einem der Ansprüche 1 bis 6, **dadurch gekennzeichnet, daß** an dem Betätigungshebel eine Aufnahme (7) zur Festlegung eines Seilzugs der Feststellbremse vorgesehen ist.

8. Vorrichtung nach einem der Ansprüche 1 bis 7, **dadurch gekennzeichnet, daß** der Betätigungshebel (1) und die Trommel (3) als zwei separate, durch Verbindungsmittel (8) aneinander festlegbare Bauteile ausgebildet sind.

9. Vorrichtung nach einem der Ansprüche 1 bis 8, **dadurch gekennzeichnet, daß** die Trommel (3) aus einem anderen Material als der Betätigungshebel (1) besteht.

10. Vorrichtung nach einem der Ansprüche 1 bis 9, **dadurch gekennzeichnet, daß** der Betätigungshebel (1) als Betätigungshebel einer Handbremse eines Kraftfahrzeugs ausgeformt ist.

11. Vorrichtung nach einem der Ansprüche 1 bis 10, **dadurch gekennzeichnet, daß** der Betätigungshebel (1) als Fußpedal einer Fußfeststellbremse eines Kraftfahrzeugs ausgeformt ist.

## Claims

1. A device for actuating parking brakes in motor vehicles, comprising
an actuating lever (1) which is mounted in a manner such that it can rotate relative to the body of the motor vehicle about an axis (2),
a drum (3) which is arranged concentrically with the axis (2) and extends axially, and
a spring element (4) which is rotationally fixed with respect to the axis (2) and can be supported against an inner circumferential wall (3a) of the drum,
**characterized in that**
the drum (3) is connected in a rotationally fixed manner to the actuating lever (1).

2. The device as claimed in claim 1, **characterized in that** the spring element is formed as a helical spring (4) from a coiled spring wire, the coils of the spring wire bearing with their radially outwardly directed surfaces against the inner circumferential wall (3a).

3. The device as claimed in claim 2, **characterized in that** ends (4a, 4b) of the spring wire are led out of the drum (3) in a manner directed essentially tangentially away from the helical spring (4) by means of openings in the drum (3).

4. The device as claimed in claim 2 or 3, **characterized in that** a free end of the spring wire is fixed to a release lever (5).

5. The device as claimed in one of claims 2 to 4, **characterized in that** a fixed end of the spring wire is connected by means of an abutment (6) to an element of the motor vehicle, which element is secured on the body.

6. The device as claimed in claim 5, **characterized in that** the fixed end of the spring wire is inserted in a clamping manner into a sleeve (6a) which is formed on the abutment and is closed or tapered at one end.

7. The device as claimed in one of claims 1 to 6, **characterized in that** a holder (7) for securing a control cable of the parking brake is provided on the actuating lever.

8. The device as claimed in one of claims 1 to 7, **characterized in that** the actuating lever (1) and the drum (3) are designed as two separate components which can be fixed on each other by connecting means (8).

9. The device as claimed in one of claims 1 to 8, **characterized in that** the drum (3) consists of a different material than the actuating lever (1).

10. The device as claimed in one of claims 1 to 9, **characterized in that** the actuating lever (1) is formed as an actuating lever of a hand brake of a motor vehicle.

11. The device as claimed in one of claims 1 to 10, **characterized in that** the actuating lever (1) is formed as a foot pedal of a foot-operated parking brake of a motor vehicle.

## Revendications

1. Dispositif pour l'actionnement de freins de stationnement pour des véhicules automobiles, comprenant
un levier d'actionnement (1) monté rotatif autour d'un axe (2) par rapport à la carrosserie du véhicule automobile,
un tambour (3) disposé concentriquement à l'axe (2) et s'étendant axialement, et
un élément à ressort (4) fixé solidaire en rotation par rapport à l'axe (2), pouvant s'appuyer contre une paroi périphérique interne (3a) du tambour,
**caractérisé en ce que**
le tambour (3) est connecté de manière solidaire en rotation au levier d'actionnement (1).

2. Dispositif selon la revendication 1, **caractérisé en ce que** l'élément à ressort est réalisé sous forme de ressort hélicoïdal (4) en un fil pour ressort enroulé, les enroulements du fil pour ressort s'appliquant avec leurs surfaces orientées radialement vers l'extérieur contre la paroi périphérique interne (3a).

3. Dispositif selon la revendication 2, **caractérisé en ce que** des extrémités (4a, 4b) du fil pour ressort sont sorties du tambour (3) au moyen de perforation du tambour (3) suivant une orientation essentiellement tangentielle s'écartant du ressort hélicoïdal (4).

4. Dispositif selon la revendication 2 ou 3, **caractérisé en ce qu'**une extrémité libre du fil pour ressort est fixé à un levier de desserrage (5).

5. Dispositif selon l'une des revendications 2 à 4, **caractérisé en ce qu'**une extrémité fixe du fil pour ressort est connectée au moyen d'une butée (6) à un élément fixé à la carrosserie du véhicule automobile.

6. Dispositif selon la revendication 5, **caractérisé en ce que** l'extrémité fixe du fil pour ressort est insérée avec serrage dans une cosse (6a) réalisée sur la butée, fermée à une extrémité ou se rétrécissant.

7. Dispositif selon l'une des revendications 1 à 6, **caractérisé en ce que** l'on prévoit sur le levier d'actionnement un logement (7) pour la fixation d'un câble de frein du frein de stationnement.

8. Dispositif selon l'une des revendications 1 à 7, **caractérisé en ce que** le levier d'actionnement (1) et le tambour (3) sont réalisés sous forme de deux composants séparés pouvant être fixés l'un à l'autre par des moyens de connexion (8).

9. Dispositif selon l'une des revendications 1 à 8, **caractérisé en ce que** le tambour (3) se compose d'un autre matériau que celui du levier d'actionnement (1 ).

10. Dispositif selon l'une des revendications 1 à 9, **caractérisé en ce que** le levier d'actionnement (1) est formé en tant que levier d'actionnement d'un frein à main d'un véhicule automobile.

11. Dispositif selon l'une des revendications 1 à 10, **caractérisé en ce que** le levier d'actionnement (1) est formé en tant que pédale de pied d'un frein de stationnement à pédale d'un véhicule automobile.
